# NEW EUROPEAN PATENT SPECIFICATION

(11) **EP 0 328 289 B2**
(45) Date of publication and mention of the opposition decision: **04.03.1998**
(45) Mention of the grant of the patent: 18.05.1994
(21) Application number: 89300933.2
(22) Date of filing: 31.01.1989
(51) Int. Cl.: G07F 7/10

(54) **IC card and method of writing its operation program**
Chipkarte und Verfahren zum Einschreiben seines Arbeitsprogramms
Carte à circuit intégré et méthode d'inscription de son programme d'opération

(30) Priority: 03.02.1988 JP 21919/88; 11.01.1989 JP 2899/89
(43) Date of publication of application: 16.08.1989
(73) Proprietor: Hitachi Maxell Ltd., Osaka-fu (JP)
(72) Inventor: Shinagawa, Toru, Toride-shi (JP)
(74) Representative: Senior, Alan Murray

(56) References cited:
- EP-A- 0 217 654
- WO-A-87/05420
- FR-A- 2 591 008
- PATENT ABSTRACTS OF JAPAN vol. 11, no. 42 (P-545)(2489) 06 February 1987 ; & JP-A-61 211 788
- "Keine Angst für UNIX: Ein Lehrbuch für Einsteiger", Duesseldorf 1987, VDI-Verlag

## Description

### BACKGROUND OF THE INVENTION

This invention relates to an IC card and a method of writing its operation program. More particularly, this invention relates to an IC card in which its operation program cannot be altered by any person or party except an authorized one and relates also to a method of writing the operation program in the IC card.

IC cards are now being put into practical use in various systems including credit systems for the sales and purchases of commodities, cash payment/deposit systems in banks, and debt payment systems in hospitals, company employees' restaurants, etc. In such systems, an illicit use of the IC card is a serious problem.

Commonly, the IC card has a microprocessor and a memory built in it. Also, the IC card includes a built-in interface for data transmission and reception between it and an external apparatus such as a host computer or an IC card reader/writer. The IC card is used in a state connected to the host computer or loaded on the IC card reader/writer. The operation sequence for transmission and reception of data between the IC card and the external apparatus includes the steps of decoding a command group, transmitted from the external apparatus, by an internal control program of the IC card, executing necessary memory access, for example, data writing, reading or erasing according to an operation program stored in the memory of the IC card, and transmitting the result of the memory access to the external apparatus as a response to the command group.

Programs stored in the IC card include a program pertinent to the control operation of the built-in microprocessor itself and a program for controlling the fundamental internal circuit of the IC card. Besides these programs, there are operation programs a suitable one of which is selected so that the microprocessor can execute a specific processing procedure corresponding to a specific function. Such operation programs include a test program and various application programs.

Generally, the former programs are mostly prepared together with the built-in microprocessor and stored in, for example, a mask ROM. Therefore, these programs are not easily rewritable or alterable. On the other hand, the latter programs or operation programs are down-loaded later to the memory from, for example, the host computer. Therefore, these operation programs are alterable.

An IC card in which its operation program is down-loaded later is disclosed in, for example, JP-A-61-211788. In the disclosed IC card, an electrically erasable non-volatile memory or the like is used as a program storage part storing an operation program so that the operation program is alterable. However, in such an IC card, the operation program stored in the IC card may be illicitly altered by rewriting, and there is the fear of illicit use of the altered IC card.

### Summary of the Invention

With a view to obviating the defect of the prior art IC card, that its operation program is easily alterable, it is an object of the present invention to provide an IC card in which its operation program cannot be easily altered so as to prevent its illicit use and in which the secrecy of its operation program can be secured.

Another object of the present invention is to provide an IC card in which an operation program written by down-loading cannot be altered by any person or party except an authorised one.

Still another object of the present invention is to provide a method of writing an operation program in an IC card so as to attain the above objects.

FR-A-2,591,008 and US-A-4,887,234 disclose an IC card comprising memory means for storing data which is alterable, and processor means for executing a predetermined sequence of processing steps according to a control program, wherein said memory means stores alterability/non-alterability information indicating whether respective data files are alterable or non-alterable, and said IC card comprises means for executing alteration of said operation programs when said operation program alterability/non-alterability information indicates that a respective data file is alterable.

WO-A-87/05420 discloses an IC card comprising memory means for storing data which is alterable, and processor means for executing a predetermined sequence of processing steps according to a control program, wherein said memory means stores alterability/non-alterability information indicating whether respective data fields are alterable or non-alterable, and said IC card comprises means for executing alteration of said operation programs when said operation program alterability/non-alterability information indicates that a respective data field is alterable.

WO-A-87/07063 discloses an IC card comprising memory means for storing data which is alterable, and processor means for executing a predetermined sequence of processing steps according to an executive operating system, wherein said memory means stores alterability/non-alterability information indicating whether respective data files are alterable or non-alterable, said IC card comprises means for executing alteration of said operation programs when said operation program alterability/non-alterability information indicates that a respective data file is alterable, and the card uses an optional password which the user must enter before gaining access to and being able to alter a file.

The present invention, as defined in claim 1, provides means for permitting change-over of an operation program alterability/non-alterability information stored in the IC card memory between the alterable and non-alterable modes by detecting coincidence between collation information and externally applied input information.

A method of utilising the IC card to make use of the invention is defined in claim 10.

The present invention is featured by the fact that, at the time of writing an operation program in an IC card, identification information and attribute information of the operation program are written in the IC card, while at the time of altering the operation program, the attribute information is referenced to permit alteration only when the operation program is alterable, thereby improving the security of secrecy during writing the operation program in the IC card. Further, at the time of alteration of the attribute information, the identification information is collated with externally applied input information so as to detect coincidence therebetween, and, when the coincidence is detected, and the attribute information is to be altered, any person or party except a specifically limited or authorized one is not permitted to execute the alteration of the attribute information.

The IC card of the present invention which attains the above objects comprises a memory for storing operation program alterability non-alterability information indicating whether or not an operation program can be altered and collation information referenced to permit change-over of the operation program alterability/non-alterability information between an alterable mode and a non-alterable mode, means for changing over the operation program alterability/non-alterability information to one of the alterable mode and the non-alterable mode by detecting coincidence between the collation information and externally applied input information, and means for executing alteration of the operation program when the operation program alterability/non-alterability information is in the alterable mode.

Thus, according to the IC card of the present invention, operation program alterability/non-alterability information and collation information are stored in the IC card. In the IC card, the operation program alterability/non-alterability information is referenced to decide whether an operation program is alterable or non-alterable, and, when the collation information coincides with externally applied input information, alteration of the operation program by an authorized person or party is permitted. Therefore, the security of secrecy of the operation program of the IC card or of the alteration of the operation program can be improved, and illicit alteration of the operation program can be prevented.

### BRIEF DESCRIPTION OF THE DRAWINGS

Fig. 1 is a block diagram of an IC card which is not an embodiment of the present invention but is useful for understanding.

Fig. 2 is a flow chart showing a sequence of steps for writing an operation program in the IC card shown in Fig. 1.

Fig. 3 is a flow chart showing a sequence of steps for writing identification information and attribute information in the IC card shown in Fig. 1.

Figs. 4A and 4B show examples of combinations of the identification information and the attribute information stored in the IC card shown in Fig. 1.

Fig. 5 is a block diagram of an embodiment of the IC card according to the present invention.

Fig. 6 is a flow chart showing a sequence of steps for writing a plurality of operation programs in the IC card shown in Fig. 5.

Fig 7 is a flow chart showing a sequence of steps for writing identification information and attribute information in the IC card shown in Fig. 5.

Figs. 8A to 8M show examples of combinations of the identification information, attribute information and various programs stored in the program storage part of the IC card shown in Fig. 5.

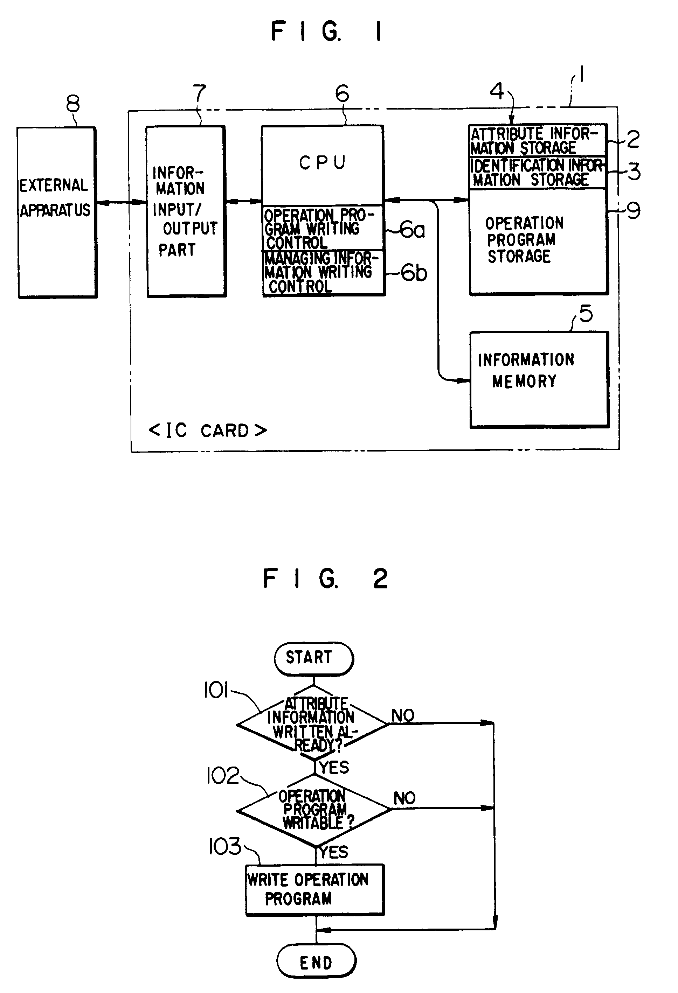

An IC card which is not an embodiment of the present invention but is useful for understanding will now be described in detail with reference to Figs. 1, 5 and 9 of the drawings. Referring to each of Figs. 1, 5 and 9, the IC card generally designated by the reference numeral 1 comprises a program storage part 4, an information memory part 5, a central processor unit (CPU) 6 and an information input/output part 7. The IC card 1 is mounted on or connected to an external apparatus 8 (which is, for example, an IC card reader/writer or a host computer) and starts to operate in response to a signal applied from the external apparatus 8. The operation of the IC card 1 is determined by an internally stored operation program or an operation program down-loaded and stored in the program storage part 4, and the CPU 6 activates such an operation program. The CPU 6 executes transmission and reception of information between the IC card 1 and the extemal apparatus 8 (for example, the IC card reader/writer or the host computer) through the information input/output part 7, writing information in the information memory part 5 and program storage part 4, and reading information out of the information memory part 5 and program storage part 4.

The program storage part 4 and the information memory part 5 of the IC card 1 are each in the form of an alterable non-volatile memory such as an EEPROM (an electrically erasable and programmable ROM). The program storage part 4 includes an attribute information storage region 2 storing attribute information of an operation program, an identification information storage region 3 storing identification information of the operation program and an operation program storage region 9.

The contents of the IC card shown in Fig. 1 will first be described.

In the attribute information storage region 2. attribute information relevant to alteration of the operation program is recorded. For example, attribute information "W (write)" meaning that the operation program is alterable, and attribute information "R (read-only)" meaning that the operation program is non-alterable, are recorded in the attribute information storage region 2. In the identification information storage region 3, identification information of the operation program or of the name of the writer of the operation program is recorded. For example, the pass word and the name of the operation program are recorded in the identification information storage region 3. The operation program is recorded in the operation program storage region 9.

The attribute information is information which indicates whether or not the operation program stored in the operation program storage region 9 can be altered, and the identification information is collation information (alterable condition information) which is collated at the time of changing over the mode of the attribute information. Both the attribute information and the identification information may be written at the time of writing the operation program or may be written independently of the operation program writing operation.

Writing or alteration of an operation program is carried out in response to the application of a command from the external apparatus 8 to the CPU 6 which includes a microprocessor. When the CPU 6 decodes the command and detects that an operation program is to be written, a sequence of processing steps is executed according to an operation program writing control program 6a stored in the CPU 6. This operation program write control program 6a is as shown in Fig. 2.

In a step 101 in Fig. 2, decision is made as to whether or not attribute information is written already in the attribute information storage region 2. When the result of decision in the step 101 is "Yes", decision is then made in the next step 102 as to whether or not the attribute information indicates the alterability of an operation program. When the result of decision in the step 102 is "Yes", the CPU 6 carries out, in the next step 103, necessary processing to write an externally supplied operation program in the IC card 1.

In the manner of processing described above, an externally supplied operation program can be written in the operation program storage part 9 under the condition that attribute information is written already, and such an operation program cannot be written unless the attribute information is in its alterable mode. Therefore, writing of an operation program can be inhibited by rendering the attribute information in its non-alterable mode.

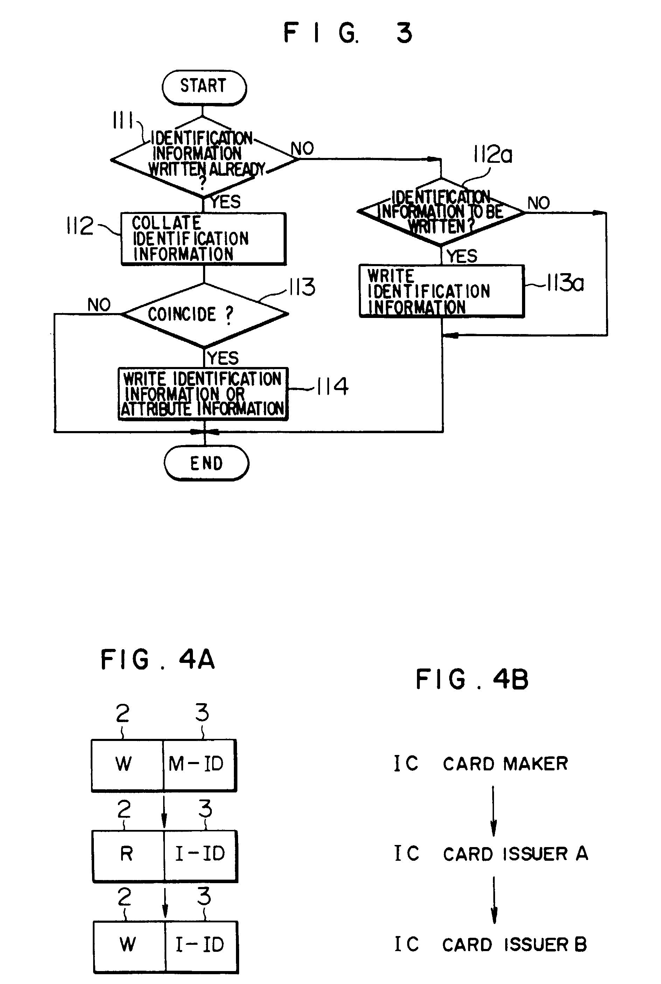

Writing of the attribute information itself, as well as writing of identification information and alteration of these information, is executed by activating a managing information writing control program 6b stored in the CPU 6. Fig. 3 is a flow chart of the control sequence, according to the managing information writing control program 6b.

In a step 111 in Fig. 3, decision is made as to whether or not identification information is stored already in the identification information storage region 3. When the result of decision in the step 111 is "No", the step 111 is followed by a step 112a. In the step 112a, the CPU 6 decodes information contained at a predetermined position in input information to decide whether or not writing of identification information is commanded. When the result of decision in the step 112a is "Yes", the identification information is written in the next step 113a. On the other hand, when the result of decision in the step 112a is "No", the control sequence according to this program 6b is ended.

When, on the other hand, the result of decision in the step 111 is "Yes", the identification information stored already is read out from the identification information storage region 3 in the next step 112 and is collated with the new identification information applied to the IC card 1 as part of the input information. Then, in the next step 113, coincidence between the former and latter identification information is checked. Only when the result of checking in the step 113 is "Yes", the step 113 is followed by a step 114. In the step 114, the CPU 6 receives the new identification information or attribute information applied to the IC card 1, and, after deciding the information to be stored, stores the new identification information or attribute information in the identification information storage region 3 or attribute information storage region 2 to execute alteration of the information stored already in the storage region 3 or 2. On the other hand, when the result of collation in the step 112 followed by the result of checking in the step 113 proves non-coincidence between the identification information, the control sequence according to this program 6b comes to its end.

Usually, an IC card maker manufactures IC cards, and an IC card issuer purchased the IC cards writes predetermined data, an operation program, etc. in the IC cards so that the IC cards can be utilized in a desired form. The IC card issuer issues the IC cards to IC card utilizers, and the IC card utilizers (holders) received the IC cards use the IC cards or further issue the IC cards to IC card users.

In such a case, the operation program is generally written in the IC card 1 by both the IC card maker and the IC card issuer. The IC card maker who manufactures the IC card 1 from an IC chip is required to test the IC card 1 so as to confirm whether or not the IC card 1 can properly operate. For this purpose, it is necessary to write another operation program, that is, a test program in the IC card 1. In this case, the identification information "M-ID" of the IC card maker is first written in the identification information storage region 3 according to the managing information writing control program 6b as shown in Fig. 4A. and, using this identification information "M-lD", the attribute information "W --- (alterable)" is then written in the attribute information storage region 2. Then, the test-purpose operation program (the test program) is written in the operation program storage region 9, and the IC card 1 is tested according to the test program. When the IC card 1 is decided to properly operate, the IC card 1 is delivered from the IC card maker to an IC card issuer A as shown in Fig. 4B. At this time, the IC card issuer A receiving the IC card 1 is informed of the identification information "M-ID" written in the IC card 1 by the IC card maker.

The IC card issuer A writes a necessary operation program in the operation program storage region 9 of the IC card 1. (In this case, the test program written previously by the IC card maker is automatically altered.) Then, according to the operation program writing control program 6a. the identification information "M-ID" reported from the IC card maker is altered to, for example. "I.ID" representing the identification information of the IC card issuer A, and the attribute information "W" is also altered to "R --- (non-alterable)".

In the IC card 1 having such attribute information "R" stored in the storage region 2, alteration of its operation program according to the operation program writing control program 6a shown in Fig. 2 is now impossible, and an attempt to alter the operation program fails. Alteration of the operation program written in the IC card 1 is not possible unless the attribute information "R --- (non-alterable)" stored in the attribute information storage region 2 is altered to the attribute information "W --- (alterable)" according to the managing information writing control program 6b shown in Fig. 3. Thus, alteration of the operation program is impossible for persons or parties except the IC card issuer A who knows the identification information "I-ID".

Suppose, for example, that another IC card issuer B desires addition of another operation program. In such a case, the IC card issuer A alters the attribute information from "R -- (non-alterable)" to "W ---(alterable)" using the identification information "I-ID" and then delivers the IC card 1 to the IC card issuer B. After the IC card issuer B adds an operation program, the IC card issuer A alters the attribute information from "W --- (alterable)" to "R --- (non-alterable)" again. In this case, the IC card issuer A is authorized to alter the operation program. When the IC card issuer A abandons the right to alter the operation program, the IC card issuer B receiving the IC card 1 is namely informed of the identification information "I-ID".

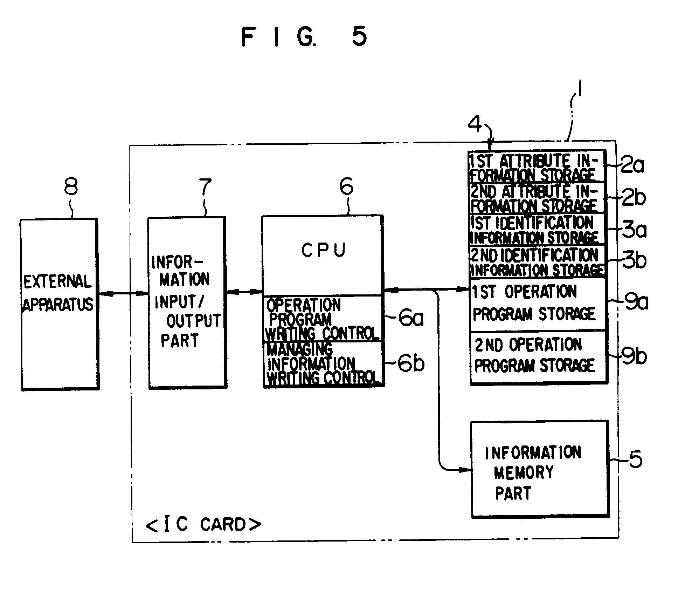

An embodiment of the ID card according to the present invention will now be described in detail with reference to Figs. 5, 6 and 7.

Referring to Fig. 5. the IC card 1 can store a plurality of operation programs. For example, the program storage part 4 is designed to include two operation program storage regions, that is, a first and a second operation program storage regions 9a and 9b, so that two operation programs can be stored in the program storage part 4. Further, the program storage part 4 includes a first and a second attribute information storage regions 2a and 2b storing attribute information corresponding to the first and second operation programs stored in the first and second operation program storage regions 9a and 9b respectively, and a first and a second identification information storage regions 3a and 3b storing identification information corresponding to the first and second attribute storage regions 2a and 2b respectively.

As in the case of the IC card of Fig 1, the attribute information, for example. "W (write = alterable)" or "R (read-only = non-alterable)" relevant to alteration of the first and second operation programs stored in the first and second operation program storage regions 9a and 9b respectively is recorded in each of the first and second attribute information storage regions 2a and 2b. Also, as in the case of the IC card of Fig 1, the identification information of the corresponding operation program or of the name of the writer of the corresponding operation program is recorded in each of the first and second identification information storage regions 3a and 3b. For example, the pass word and the name of the operation program are recorded in each of these storage regions 3a and 3b.

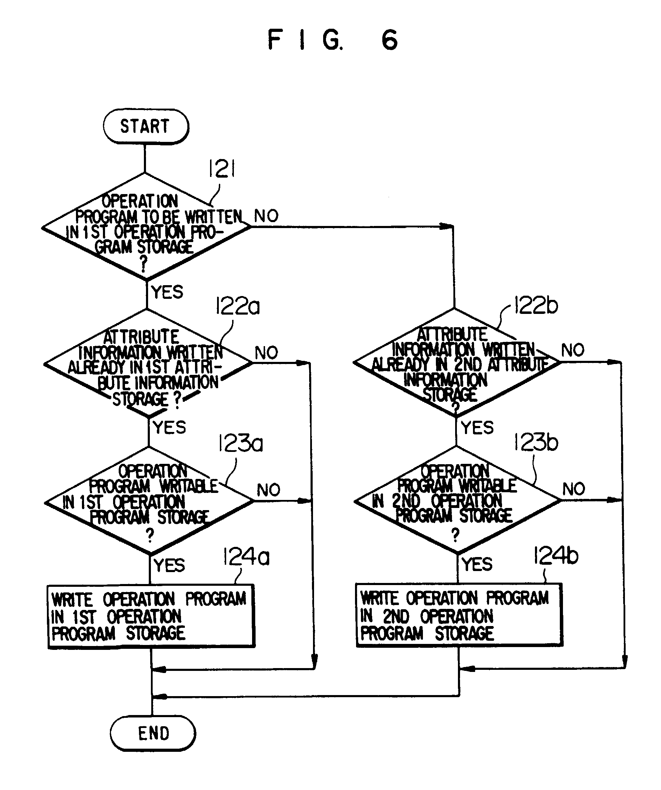

The operation of the IC card 1 shown in Fig. 5 will be described with reference to Fig. 6. In a step 121 in Fig. 6, the CPU 6 decodes information contained at a predetermined position in input information transmitted from the external apparatus 8, and, when the CPU 6 detects that a command for writing an operation program is applied, the CPU 6 decides whether or not such an operation program is to be written in the first operation program storage region 9a.

When the result of decision in the step 121 is "Yes" meaning that the operation program is to be written in the first operation program storage region 9a, decision is made in the next step 122a as to whether or not attribute information is written already in the first attribute information storage region 2a. When the result of decision in the step 122a is "Yes". decision is made in the next step 123a as to whether or not the attribute information is in the alterable mode. When the result of decision in the step 123a is "Yes", the CPU 6 permits alteration of the operation program in the next step 124a. Therefore, the first operation program can be written in the first operation program storage region 9a in the IC card 1, and, after executing writing of the operation program transmitted from the external apparatus 8, the processing according to the processing program comes to its end.

The manner of processing by the CPU 6 to permit alteration of the operation program is such that, in the program storage part 4 which is formed by, for example, an EEPROM, the address space of the first and second operation program storage regions 9a and 9b, in which writing is normally inhibited, is managed to permit writing of the operation program.

When the result of decision in the step 121 is "No" meaning that writing of the operation program in the first operation program storage region 9a is not commanded, decision is made in the next step 122b as to whether or not attribute information is written already in the second attribute information storage region 2b. When the result of decision in the step 122b is "Yes", decision is then made in the next step 123b as to whether or not that attribute information is in its alterable mode. When the result of decision in the step 123b is "Yes", the CPU 6 makes necessary processing in the next step 124b to permit alteration of the operation program. As a result, the operation program can be written in the second operation program storage region 9b of the IC card 1, and, after writing the operation program transmitted from the external apparatus 8, the processing according to this processing program comes to its end.

When the result of decision in the step 122a or 122b is "No", or when the result of decision in the step 123a or 123b is "No", the processing according to this processing program comes to its end without writing the operation program.

Thus, by merely maintaining the attribute information in its non-alterable mode, writing of the operation program in the IC card 1 can be inhibited.

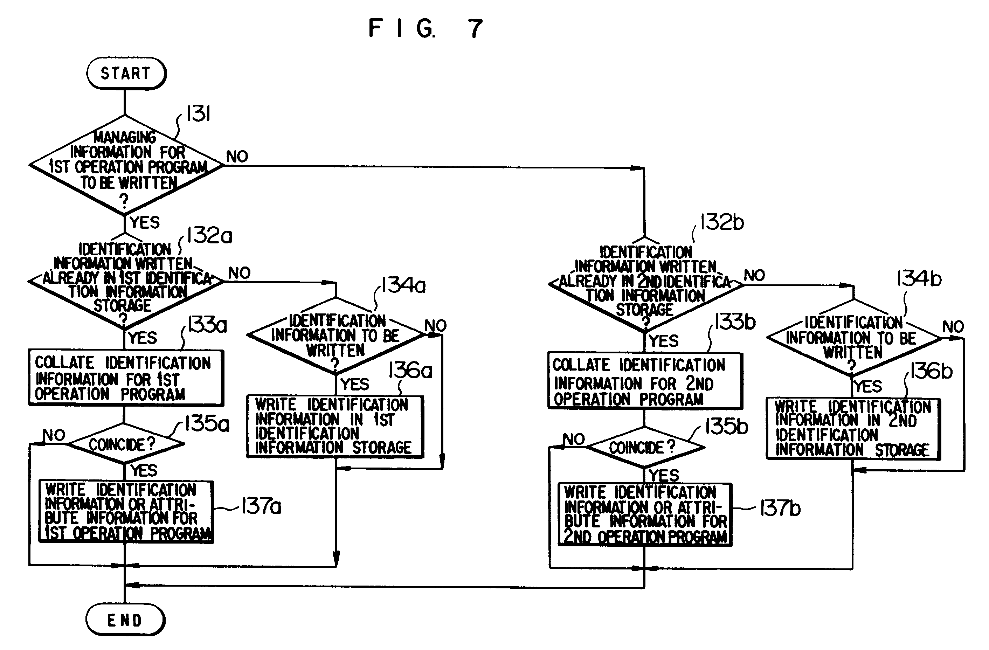

At the time of writing the attribute information itself, at the time of writing the identification information and at the time of altering these information in the manner described above, the external apparatus 8 sends out a command indicating writing of the managing information (the attribute information and the identification information). When the CPU 6 receives and decodes the command and detects that writing of the managing information is commanded, the CPU 6 activates the managing information writing control program 6b stored therein. As a result, a managing information writing sequence as shown in Fig. 7 is executed.

In a step 131 in Fig. 7, the CPU 6 decodes a command contained at a predetermined position of input information, and, when the CPU 6 detects that writing of managing information is commanded, decision is made as to whether or not writing of the managing information relevant to the first operation program is commanded. When the result of decision in the step 131 is "Yes", this means that writing of the managing information relevant to the first operation program is commanded. Then, in the next step 132a, decision is made as to whether or not identification information is written already in the first identification information storage region 3a. When the result of decision in the step 132a is "No", the step 132a is followed by a step 134a. When the CPU 6, which decodes the information contained at the predetermined position of the input information, detects in the step 134a that writing of identification information is commanded, the identification information is written in a step 136a in the first identification information storage region 3a, and, after writing, the processing according to this processing program comes to its end. On the other hand, when the result of decision in the step 134a is "No", the processing according to this processing program comes to its end, and another processing sequence takes place.

When, on the other hand, the result of decision in the step 132a is "Yes", the written identification information is read out from the first identification information storage region 3a in a step 133a, and this identification information is collated with the identification information relevant to the first operation program and contained in the input information transmitted from the external apparatus 8. A conincidence/noncoincidence flag reflecting the result of collation is stored in a predetermined memory region of the memory. In a step 135a, the coincidence/noncoincidence flag is referenced to decide whether or not coincidence between the identification information is detected. Only when the coincidence is detected, the step 135a is followed by a step 137a. In the step 137a, the CPU 6 receives the identification information or attribute information relevant to the applied new first operation program and decides that either the identification information or the attribute information is contained in the input information. According to the result of decision, the CPU 6 stores the identification information or the attribute information in the corresponding storage region which is the first attribute information storage region 2a or the first identification information storage region 3a. This executes alteration of the identification information or attribute information. After the alteration, the processing according to this processing program comes to its end. When the result of decision in the step 135a is "No" meaning that noncoincidence is detected, the processing according to this processing program comes to its end.

When the result of decision in the step 131 is "No" meaning that writing of the managing information relevant to the first operation program is not commanded, the step 131 is followed by a step 132b. In the step 132b, decision is made as to whether or not identification information is written already in the second identification information storage region 3b. When the result of decision in the step 132b is "No", the step 132b is followed by a step 134b. When the CPU 6, which decodes the information contained at the predetermined position of the input information, detects in the step 134b that writing of identification information is commanded, the identification information is written in a step 136b in the second identification information storage region 3b, and, after writing, the processing according to this processing program comes to its end. On the other hand, when the result of decision in the step 134b is "No", the processing according to this processing program comes to its end, and another processing sequence takes place.

On the other hand, when the result of decision in the step 132b is "Yes", the written identification information is read out from the second identification information storage region 3b in a step 133b, and this identification information is collated with the identification information relevant to the second operation program and contained in the input information. Decision is made in a step 135b as to coincidence or noncoincidence between these identification information. Only when the coincidence is detected, the step 135b is followed by a step 137b. In the step 137b, the CPU 6 receives the identification information or attribute information relevant to the applied new second operation program and decides that either the identification information or the attribute information is contained in the input information. According to the result of decision, the CPU 6 stores the identification information or the attribute information in the corresponding storage region which is the second attribute information storage region 2b or the second identification information storage region 3b. After storing, the processing according to this processing program comes to its end. When the result of decision in the step 135b is "No" meaning that noncoincidence is detected as the result of collation between the identification information, the processing according to this processing program comes to its end, and another processing sequence takes place.

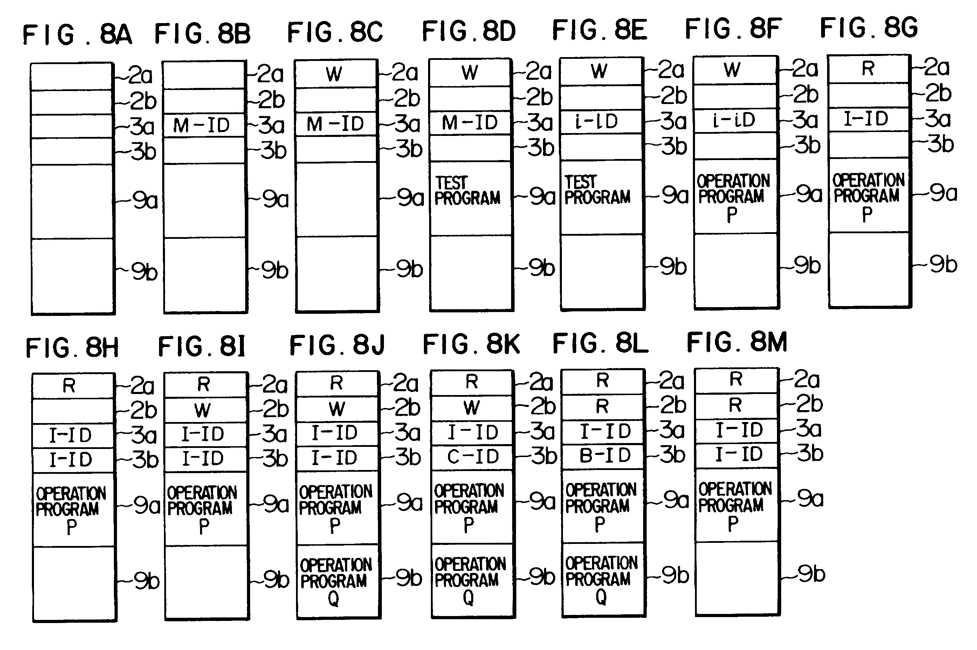

The procedure for issuing the IC card operating as described above will now be described with reference to Figs. 8A to 8M.

Fig. 8A shows the IC card 1 in a state in which nothing is written in its program storage part 4. The IC card maker loads the IC card 1 on the external apparatus 8, and a command for writing the identification information "M-ID" relevant to the first operation program is sent out from the external apparatus 8 to the IC card 1. The CPU 6 in the IC card 1 decodes the command sent out from the external apparatus 8 and detects that writing of the managing information is commanded. According to the result of decoding the command, the managing information writing control program 6b is activated. Then, the CPU 6 decodes information contained at the predetermined position of the input information and detects that writing of the managing information relevant to the first operation program is commanded. The CPU 6 checks whether or not the identification information is written already in the first identification information storage region 3a. When the CPU 6 decides that the identification information is not written in the identification information storage region 3a, the CPU 6 decodes information contained at another predetermined position of the input information and detects that writing of the identification information is commanded. After the identification information "M-lD" is written in the first identification information storage region 3a, the CPU 6 acts to end the processing according to the processing program and, at the same time, sends out a response to the external apparatus 8 to inform the termination of the processing according to the managing information writing control program 6b. The external apparatus 8 having received the response informs the IC card maker of the fact that the managing information writing process has been terminated. A display or the like is provided for this purpose.

In the processing program described above, the CPU 6 decodes the information contained at the predetermined position of the input information to detect that writing of the managing information or writing of the identification information is commanded. For this purpose, the external apparatus 8 may send out an electrical message containing a managing information writing command together with information at a predetermined position of the message, and the CPU 6 may decode such information. Alternatively, the external apparatus 8 may send out an electrical message each time some processing is executed in the IC card 1, and the CPU 6 may decode information contained at a command position of each electrical message. The same applies to the later description and also to the embodiment shown in Fig. 1.

By the processing described above, the IC card 1 is changed from the state shown in Fig. 8A to the state shown in Fig. 8B.

The IC maker then actuates the external apparatus 8 to send out a command for writing the managing information relevant to the first operation program in the IC card 1 whose state is shown in Fig. 8B. The CPU 6 in the IC card 1 decodes the command sent out from the external apparatus 8 and detects that writing of the managing information is commanded. The CPU 6 activates the managing information writing control program 6b. The CPU 6 decodes the information contained at the predetermined position of the input information and detects that writing of the managing information relevant to the first operation program is commanded. Then, the CPU 6 checks whether or not the identification information is written already in the first identification information storage region 3a. When the CPU 6 decides that the identification information is written already, the CPU 6 reads out the identification information "M-ID" from the first identification storage region 3a, and, at the same time, sends out a response to the external apparatus 8 to inform that the IC card 1 is ready to receive identification information.

The external apparatus 8 received this response sends out a message which informs the IC card maker of the fact that the IC card 1 is ready to receive identification information and which requests application of the identification information.

The IC card maker received the above message applies to the external apparatus 8 an input representing the identification information "M-lD" relevant to the first operation program together with a command commanding writing of attribute information relevant to the first operation program. The external apparatus 8 received such an input sends out to the IC card 1 an electrical message containing the identification information and the attribute information writing command.

In the IC card 1 received the above electrical message, the identification information read out from the first identification information storage region 3a is collated by the CPU 6 with the identification information of the first operation program sent out from the external apparatus 8. After confirmation of coincidence between these identification information, the CPU 6 decodes the information contained at another predetermined position of the input information and detects that writing of the attribute information "W" relevant to the first operation program is commanded, and this attribute information "W" is written in the first attribute information storage region 2a. Then, the CPU 6 acts to terminate the processing according to this processing program and sends out a response to the external apparatus 8 to inform that the managing information writing control program 6b has ended. As a result, the IC card maker is informed from the external apparatus 8 of the fact that the managing information writing sequence has ended. As a result of the above manner of processing, the state of the IC card 1 shown in Fig. 8B is changed into the state shown in Fig. 8C.

Then, the IC card maker actuates the external apparatus 8 to send out a command for writing a test program in the first operation program storage region 9a of the IC card 1. This test program is one of operation programs and is used to test the operation of the IC card 1.

When the command is received, the CPU 6 of the IC card 1 decodes the command and detects that writing of the operation program (the test program) is commanded. The CPU 6 activates the operation program writing control program 6a. Then, the CPU 6 decodes information contained at a predetermined position of the input information and detects that writing of the operation program in the first operation program storage region 9a is commanded. Then, the CPU 6 checks whether or not attribute information is written already in the first attribute information storage region 2a. Since the attribute information "W" is written already in the first attribute information storage region 2a, the CPU 6 decides that the attribute information "W" is written already in the first attribute information storage region 2a. The CPU 6 sends out a response to the external apparatus 8 to inform that the operation program can be written. Now, the IC card 1 is ready to receive program data to be then sent out from the external apparatus 8. When the program to be sent out is specified already, the external apparatus 8 sends out the specified program. When, however, the program to be sent out is not specified yet, the external apparatus 8 delivers a message to the IC card maker to request the maker to send out the program. Finally, the test program is sent out from the external apparatus 8.

When the CPU 6 receives the data of the program sent out from the external apparatus 8, the CPU 6 executes the processing program for writing the operation program (which is the test program now) in the first operation program storage region 9a. After writing, the CPU 6 terminates the processing according to the processing program and, at the same time, sends out a response to the external apparatus 8 to inform the termination of program writing according to the operation program writing control program 6a. The IC card maker is informed, through the external apparatus 8, of the fact that the writing of the operation program has ended. As a result of the above manner of processing, the IC card 1 is changed from the state shown in Fig. 8C to the state shown in Fig. 8D.

Then, using the test program stored in the first operation program storage region 9a, the IC card maker tests the operation of the IC card 1. After the IC card maker confirms (decides) that the IC card properly operates, the IC card maker delivers the IC card having the state shown in Fig. 8D to an IC card issuer A, and the identification information "M-ID" relevant to the test program is also reported from the IC card maker to the IC card issuer A.

The IC card issuer A then applies a signal representing the identification information "M-lD" as an input to the external apparatus 8 so as to collate it with the identification information "M-lD" stored in the IC card 1 having the state shown in Fig. 8D. After collation, the IC card issuer A alters the identification information "M-ID" to personally selected identification information, for example, "I-ID". The IC card 1 in this state is shown in Fig. 8E. Then, the IC card issuer A writes, for example, an operation program P in the first operation program storage region 9a by carrying out processing similar to that described above.

As a result, as shown in Fig. 8F, the test program stored already in the first operation program storage region 9a is altered to the operation program P. Therefore, the test program does not remain in the IC card 1.

The IC card 1 is issued in the manner described above. When the IC card issuer A desires to inhibit alteration of the operation program P by another person or party, the CPU 6 is activated to execute the managing information writing control program 6b to collate the identification information stored in the first identification information storage region 3a and to write the attribute information "R" in the first attribute information storage region 2a. By carrying out the program 6b, the attribute information stored in the first attribute information storage region 2a can be altered from "W" to "R". Therefore, unless the identification information "I-ID" is used for later alteration of the attribute information of the operation program P from "R" to "W", the operation program P cannot be altered. The IC card 1 in this state is shown in Fig. 8G, and, by the above manner of inhibition of alteration, the security of the IC card 1 can be greatly improved.

A person who directly uses the IC card may be present besides the IC card issuer A. Also, an IC card utilizer B who utilizes the IC card and offers the IC card to the IC card user. In this case, the IC card issuer A can permit free writing of an operation program Q prepared by the IC card utilizer B himself and can also inhibit alteration of the operation program Q.

This is attained by a process in which the IC card issuer A permits writing of the operation program Q, prepared by the IC card utilizer B, in the second operation program storage region 9b of the IC card 1. That is, the CPU 6 of the IC card 1 executes the managing information writing control program 6b to write the identification information "I-ID" in the second identification information storage region 3b. The IC card 1 in this state is shown in Fig. 8H. Then, the attribute information "W" is written in the second attribute information storage region 2b. The IC card 1 in this state is shown in Fig. 8I. The IC card issuer A delivers the IC card 1 shown in Fig. 8I to the IC card utilizer B.

The IC card utilizer B writes the operation program Q in the second operation program storage region 9b of the IC card 1 having the state shown in Fig. 8I, thereby changing the IC card 1 to the state shown in Fig. 8J. In the IC card 1 having the state shown in Fig. 8J, the attribute information of the operation program Q cannot be altered from "W" to "R". Therefore, alteration of the operation program Q cannot be inhibited.

When the IC card utilizer B desires inhibition of alteration of the operation program Q, he brings the IC card 1 having the state shown in Fig. 8J to the IC card issuer A. The IC card issuer A writes provisional identification information "C-ID" relevant to the operation program Q specified by the IC card utilizer B in the second identification information storage region 3b to obtain the IC card 1 having the state shown in Fig. 8K. Thus, inhibition of alteration of the operation program Q can be simply done.

Thereafter, using the provisional identification information "C-ID" relevant to the operation program Q, the IC card utilizer B alters the identification information "C-ID" stored in the second identification information storage region 3b to identification information "B-ID" relevant to the operation program Q according to the managing information writing control program 6b. Then, the attribute information stored in the second attribute information storage region 2b is altered from "W" to "R" thereby obtaining the IC card 1 having the state shown in Fig. 8L.

On the other hand, when the IC card issuer A does not permit writing, by another person or party, of an operation program in the second operation program storage region 9b of the IC card 1, the identification information "I-ID" is written in the second identification information storage region 3b of the IC card 1 having the state shown in Fig. 8G, thereby obtaining the IC card 1 having the state shown in Fig. 8H. Then, the attribute information "R" is written in the second attribute information storage region 2b, thereby obtaining the IC card 1 having the state shown in Fig. 8M.

Suppose further a case where the IC card issuer A originally permits writing, by the IC card utilizer B, of the operation program Q in the second operation program storage region 9b of the IC card 1 and also permits inhibition of alteration of the operation program Q. In such a case, the IC card 1 where nothing is written in each of the second identification information storage region 3b and the second attribute information storage region 2b of the IC card 1, that is, the IC card 1 having the state shown in Fig. 8G, is delivered from the IC card issuer A to the IC card utilizer B.

In the embodiment shown in Fig. 5, two operation programs are stored in the program storage part 4 of the IC card 1 by way of example. However, it is apparent that three or more operation program may be stored in the program storage part 4 of the IC card 1. Further, to deal with the increase in the number of operation programs, the number of identification information storage regions or attribute information storage regions may be increased correspondingly, so that the IC card 1 meeting more conditions can be issued.

In the aforementioned embodiments, the attribute information storage region 2 and the identification information storage region 3 are provided in the program storage part 4. However, these regions 2 and 3 may be provided in the information memory part 5. That is, these regions 2 and 3 may be provided anywhere in the alterable memory region. Further, the attribute information storage region 2 and the identification information storage region 3 may be allocated in combination to form part of a single information storage. In this case. these information read out from the single storage are utilized as the attribute information and the identification information respectively. Further, the attribute information and the identification information may be disposed at predetermined positions of the operation program.

The operation program writing control program 6a and the managing information writing control program 6b are preferably stored in a ROM, a mask ROM or the like built in the CPU 6. However, these programs 6a and 6b need not necessarily be stored in the CPU 6 and may be stored in the program storage part 4. Further, this program storage part 4 may be a RAM instead of the EEPROM.

In each of the aforementioned embodiments, it is apparent that the information input/output part 7 may be integrally combined with the central processor unit (CPU) 6. and the CPU 6 executes the various programs described above in response to commands sent through the information input/output part 7.

It will be understood from the foregoing detailed description of the present invention that a region for storing information indicating alterability or non-alterability of an operation program is provided in an IC card together with a region for storing collation information. The operation program alterability/non-alterability information is referenced to control the alteration or non-alteration of the operation program, and, when coincidence between the internal collation information and external collation information is detected, alteration of the operation program is permitted. Therefore, the security of secrecy of the operation program of the IC card or alteration of the operation program can be greatly improved to prevent illicit alteration of the operation program of the IC card.

## Claims

1. An IC card comprising
memory means (4) for storing a plurality of operation programs (9) which are alterable, and
processor means (6) for executing a predetermined sequence of processing steps according to each operation program,
said memory means storing operation program alterability/non-alterability information indicating whether each respective operation program is alterable or non-alterable, and
said IC card comprising means (6a) for executing alteration of each operation program when said operation program alterability/non-alterability information indicates that the respective operation program is alterable,
wherein said memory means stores collation information referenced with respect to respective operation programs for permitting change-over of said operation program alterability/non-alterability information between an alterable mode and a non-alterable mode, and
said IC card also comprises means (6b) for changing over said operation program alterability/non-alterability information of one of said operation programs from one to the other of said alterable mode and said non-alterable mode on detection of coincidence between said collation information of said one operation program and externally applied input information.

2. An IC card according to claim 1, wherein said IC card stores a program for changing over the mode of said operation program alterability/non-alterability information when coincidence between said input information and said collation information is detected and a program for executing alteration of said operation program when said operation program alterability/non-alterability information is in said alterable mode, and wherein said collation information is identification information referenced to identify a card handler.

3. An IC card according to claim 1 or 2, wherein said memory means (4) storing said operation program is an alterable non-volatile memory.

4. An IC card according to claim 1, 2 or 3, wherein said collation information is identification information referenced to identify said operation program.

5. An IC card according to any preceding claim, wherein said collation information includes identification information referenced to identify a card handler and identification information referenced to identify said operation program.

6. An IC card according to any preceding claim, wherein said operation program alterability/non-alterability information and said collation information are stored in memory regions where said operation programs are not stored.

7. An IC card according to any preceding claim, wherein said plural operation programs (9a,9b) are stored in different memory regions respectively.

8. An IC card according to any preceding claim, wherein said plural operation programs include a system program.

9. A method of writing an operation program in an IC card comprising the steps of storing operation program alterability/non-alterability information in an alterable mode in an attribute information storage region by alterability/non-alterability information writing means,
said IC card comprising
memory means including an operation program storage region (9a, 9b) for storing a plurality of operation programs, an attribute information storage region (2a, 2b) for storing operation program alterability/non-alterability information indicating whether or not each respective operation program can be written in said operation program storage region,
operation program writing means (6a) for storing an externally supplied operation program in said operation program storage region when said operation program alterability/non-alterability information is in said alterable mode, and
execution processor means (6) for executing a predetermined sequence of processing steps according to an operation program,
wherein said memory means of said IC card further includes an identification information storage region (3a, 3b) for storing collation information referenced with respect to respective operation programs for permitting change-over of said operation program alterability/non-alterability information stored in said attribute information storage region between the alterable mode and a non-alterable mode,
said IC card further includes alterability/non-alterability information writing means (6b) for storing said operation program alterability/non-alterability information of one of said operation programs in said attribute information storage region when externally applied input information coincides with said collation information of said one operation program stored in said identification information storage region, and
the method further includes the steps of storing an externally supplied operation program in said operation program storage region by said operation program writing means, and then storing said operation program alterability/non-alterability information of said non-alterable mode in said attribute information storage region by said alterability/non-alterability information writing means.

## Patentansprüche

1. Eine Chipkarte, mit
einer Speichereinrichtung (4) zum Speichern mehrerer veränderbarer Betriebsprogramme (9), und
einer Prozessoreinrichtung (6) zum Ausführen einer vorgegebenen Folge von Verarbeitungsschritten gemäß jedem Betriebsprogramm,
wobei die Speichereinrichtung Information bezüglich der Veränderbarkeit/Nichtveränderbarkeit der Betriebsprogramme speichert, die angibt, ob jedes entsprechende Betriebsprogramm veränderbar oder nicht veränderbar ist, und
die Chipkarte eine Einrichtung (6a) enthält, die eine Veränderung jedes Betriebsprogramms ausführt, wenn die Information bezüglich der Veränderbarkeit/Nichtveränderbarkeit der Betriebsprogramme angibt, daß das jeweilige Betriebsprogramm veränderbar ist,
wobei die Speichereinrichtung Vergleichsinformation speichert, auf die für die entsprechenden Betriebsprogramme Bezug genommen wird, um ein Umschalten der Information bezüglich der Veränderbarkeit/Nichtveränderbarkeit der Betriebsprogramme zwischen einem veränderbaren Modus und einem nicht veränderbaren Modus zu ermöglichen, und
die Chipkarte außerdem versehen ist mit einer Einrichtung (6b) zum Umschalten der Information bezüglich der Veränderbarkeit/Nichtveränderbarkeit der Betriebsprogramme eines der Betriebsprogramme vom veränderbaren Modus in den nicht veränderbaren Modus oder umgekehrt, wenn eine Übereinstimmung zwischen der Vergleichsinformation des einen Betriebsprogramms und von außen eingegebener Eingangsinformation erfaßt wird.

2. Eine Chipkarte gemäß Anspruch 1, bei der die Chipkarte ein Programm zum Umschalten der Form der Information bezüglich der Veränderbarkeit/Nichtveränderbarkeit des Betriebsprogramms bei Erfassung der Übereinstimmung zwischen der Eingabeinformation und der Vergleichsinformation sowie ein Programm für die Ausführung der Veränderung des Betriebsprogramms speichert, wenn die Information bezüglich der Veränderbarkeit/Nichtveränderbarkeit des Betriebsprogramms in der Form der Veränderbarkeit ist, und bei der die Vergleichsinformation eine Identifizierungsinformation ist, auf die Bezug genommen wird, um einen Kartenbenutzer zu identifizieren.

3. Eine Chipkarte gemäß Anspruch 1 oder 2, bei der die das Betriebsprogramm speichernde Speichereinrichtung (4) ein veränderbarer nichtflüchtiger Speicher ist.

4. Eine Chipkarte gemäß Anspruch 1, 2 oder 3, bei der die Vergleichsinformation eine Identifizierungsinformation ist, auf die Bezug genommen wird, um das Betriebsprogramm zu identifizieren.

5. Eine Chipkarte gemäß einem vorangehenden Anspruch, bei der die Vergleichsinformation eine Identifizierungsinformation, auf die Bezug genommen wird, um eine Kartenbenutzer zu identifizieren, sowie eine Identifizierungsinformation, auf die Bezug genommen wird, um das Betriebsprogramm zu identifizieren, enthält.

6. Eine Chipkarte gemäß irgendeinem vorangehenden Anspruch, bei der die Information bezüglich der Veränderbarkeit/Nichtveränderbarkeit der Betriebsprogramme und die Vergleichsinformation in Speicherbereichen gespeichert sind, in denen keine Betriebsprogramme gespeichert sind.

7. Eine Chipkarte gemäß irgendeinem vorangehenden Anspruch, bei der die mehreren Betriebsprogramme (9a, 9b) in jeweils unterschiedlichen Speicherbereichen gespeichert sind.

8. Eine Chipkarte gemäß irgendeinem vorangehenden Anspruch, bei der die mehreren Betriebsprogramme ein Systemprogramm enthalten.

9. Ein Verfahren zum Schreiben eines Betriebsprogramms in eine Chipkarte, das die Schritte des Speicherns von Information bezüglich der Veränderbarkeit/Nichtveränderbarkeit von Betriebsprogrammen in einem veränderbaren Modus in einem Attributinformation-Speicherbereich mittels einer Einrichtung zum Schreiben von Veränderbarkeits-/Nichtveränderbarkeits-Information enthält,
wobei die Chipkarte enthält:
eine Speichereinrichtung mit einem Betriebsprogramm-Speicherbereich (9a, 9b) zum Speichern mehrere Betriebsprogramme, einem Attributinformation-Speicherbereich (2a, 2b) zum Speichern von Information bezüglich der Veränderbarkeit/Nichtveränderbarkeit der Betriebsprogramme, die angibt, ob jedes entsprechende Betriebsprogramm in den Betriebsprogramm-Speicherbereich geschrieben werden kann,
eine Betriebsprogramm-Schreibeinrichtung (6a) zum Speichern eines von außen gelieferten Betriebsprogramms in den Betriebsprogramm-Speicherbereich, wenn die Information bezüglich der Veränderbarkeit/Nichtveränderbarkeit der Betriebsprogramme im veränderbaren Modus ist, und
eine Ausführungsprozessoreinrichtung (6) zum Ausführen einer vorgegebenen Folge von Verarbeitungsschritten gemäß einem Betriebsprogramm,
wobei die Speichereinrichtung der Chipkarte ferner einen Identifizierungsinformation-Speicherbereich (3a, 3b) zum Speichern von Vergleichsinformation enthält, auf die für entsprechende Betriebsprogramme Bezug genommen wird, um ein Umschalten der im Attributinformation-Speicherbereich gespeicherten Information bezüglich der Veränderbarkeit/Nichtveränderbarkeit der Betriebsprogramme zwischen dem veränderbaren Modus und dem nicht veränderbaren Modus zu ermöglichen,
wobei die Chipkarte ferner eine Einrichtung (6b) zum Schreiben der Veränderbarkeits-/Nichtveränderbarkeits-Information enthält, die die Information bezüglich der Veränderbarkeit/Nichtveränderbarkeit der Betriebsprogramme eines der Betriebsprogramme im Attributinformation-Speicherbereich speichert, wenn von außen eingegebene Eingangsinformation mit der Vergleichsinformation des einen Betriebsprogramms, die in dem Identifizierungsinformation-Speicherbereich gespeichert ist, übereinstimmt, und
wobei das Verfahren ferner die Schritte des Speicherns eines von außen eingegebenen Betriebsprogramms in den Betriebsprogramm-Speicherbereich durch die Betriebsprogramm-Schreibeinrichtung und anschließend des Speicherns der Information bezüglich der Veränderbarkeit/Nichtveränderbarkeit des Betriebsprogramms des nicht veränderbaren Modus im Attributinformation-Speicherbereich mittels der Einrichtung zum Schreiben der Veränderbarkeits-/Nichtveränderbarkeits-Information enthält.

## Revendications

1. Carte CI de circuit intégré comprenant :
- un moyen formant mémoire (4) pour stocker une pluralité de programmes d'opérations (9) qui sont modifiables, et
- un moyen formant processeur (6) pour exécuter une séquence prédéterminée d'étapes de traitement conformément à chaque programme d'opérations,
ledit moyen formant mémoire stockant une information d'altérabilité/non-altérabilité du programme d'opérations qui indique si chaque programme d'opérations respectif est modifiable ou non modifiable, et ladite carte de circuit intégré comprenant un moyen (6a) pour exécuter une modification de chaque programme d'opérations quand ladite information d'altérabilité/non-altérabilité du programme d'opérations indique que le programme d'opérations respectif est modifiable,
dans laquelle :
ledit moyen formant mémoire stocke une information d'interclassement référencée pour les programmes d'opérations respectifs afin de permettre une commutation de ladite information d'altérabilité/non-altérabilité du programme d'opérations entre un mode modifiable et un mode non-modifiable, et
ladite carte de circuit intégré comprend également un moyen (6b) pour commuter ladite information d'altérabilité/non altérabilité de l'un desdits programme d'opérations de l'un desdits modes modifiable et non-modifiable vers l'autre lors de la détection d'une coïncidence entre ladite information d'interclassement dudit programme d'opérations et une information d'entrée appliquée de l'extérieur.

2. Carte de circuit intégré selon la revendication 1, dans laquelle ladite carte de circuit intégré mémorise un programme pour commuter le mode de ladite information d'altérabilité/non-altérabilité du programme d'opérations quand une coïncidence entre ladite information d'entrée et ladite information d'interclassement est détectée, et un programme pour exécuter une modification dudit programme d'opérations quand ladite information d'altérabilité/non-altérabilité du programme d'opérations est dans ledit mode modifiable, et dans laquelle ladite information d'interclassement est une information d'identification consultée pour identifier l'utilisateur de la carte.

3. Carte de circuit intégré selon la revendication 1 ou 2, dans laquelle ledit moyen formant mémoire (4) qui stocke ledit programme d'opérations est une mémoire rémanente modifiable.

4. Carte de circuit intégré selon la revendication 1, 2 ou 3, dans laquelle ladite information d'interclassement est une information d'identification consultée pour identifier ledit programmc d'opérations.

5. Carte de circuit intégré selon l'une quelconque des précédentes revendications, dans laquelle ladite information d'interclassement contient une information d'identification consultée pour identifier l'utilisateur de la carte ainsi qu'une information d'identification consultée pour identifier ledit programme d'opérations.

6. Carte de circuit intégré selon l'une quelconque des revendications précédentes, dans laquelle ladite information d'altérabilité/ non-altérabilité du programme d'opérations et ladite information d'interclassement sont stockées dans des régions de mémoire où lesdits programmes d'opérations ne sont pas stockés.

7. Carte de circuit intégré selon l'une quelconque des revendications précédentes, dans laquelle lesdits plusieurs programmes d'opérations (9a, 9b) sont respectivement stockés dans des régions de mémoire différentes.

8. Carte de circuit intégré selon l'une quelconque des revendications précédentes, dans laquelle lesdits plusieurs programmes d'opérations incluent un programme de système.

9. Procédé pour écrire un programme d'opérations dans une carte de circuit intégré qui comprend les étapes consistant à mémoriser une information d'altérabilité/non-altérabilité du programme d'opérations dans un mode modifiable dans une région de stockage d'information de caractéristique grâce à un moyen d'écriture d'information d'altérabilité/non-altérabilité,
ladite carte de circuit intégré comprenant :
- un moyen formant mémoire qui contient une région (9a, 9b) de stockage de programmes d'opérations pour stocker une pluralité de programmes d'opérations, une région (2a, 2b) de stockage d'information de caractéristique pour stocker une information d'altérabilité/ non-altérabilité du programme d'opérations indiquant si chacun desdits programmes d'opérations peut être écrit ou non dans ladite région de stockage de programmes d'opérations,
- un moyen (6a) d'écriture de programmes d'opérations servant à enregistrer un programme d'opérations appliqué de l'extérieur dans ladite région de stockage de programmes d'opérations quand ladite information d'altérabilité/non-altérabilité du programme d'opérations est dans ledit mode modifiable, et
- un moyen (6) formant processeur d'exécution, servant à exécuter une séquence prédéterminée d'étapes de traitement en accord avec un programme d'opérations,
dans lequel ledit moyen formant mémoire de ladite carte CI contient en outre une région (3a, 3b) de stockage d'information d'identification pour stocker une information d'interclassement associée aux programmes d'opérations respectifs pour permettre une commutation de ladite information d'altérabilité/non-altérabilité du programme d'opérations mémorisée dans ladite région de stockage d'information de caractéristique entre le mode modifiable et le mode non-modifiable,
ladite carte CI contient en outre un moyen (6b) d'écriture d'information d'altérabilité/non-altérabilité pour enregistrer ladite information d'altérabilité/non-altérabilité de l'un desdits programmes d'opérations dans ladite région de stockage d'information de caractéristique quand une information d'entrée appliquée de l'extérieur coïncide avec ladite information d'interclassement dudit programme d'opérations mémorisée dans ladite région de stockage d'information d'identification, et
le procédé comprend en outre les étapes consistant à mémoriser un programme d'opérations appliqué de l'extérieur dans ladite région de stockage de programmes d'opérations à l'aide dudit moyen d'écriture de programmes d'opérations, puis à stocker ladite information d'altérabilité/non-altérabilité du programme d'opérations dudit mode non-modifiable dans ladite région de stockage d'information de caractéristique à l'aide dudit moyen d'écriture d'information d'altérabilité/ non-altérabilité.
